# EUROPEAN PATENT SPECIFICATION

(11) **EP 4 000 045 B1**
(45) Date of publication and mention of the grant of the patent: **16.10.2024**
(21) Application number: 20743979.5
(22) Date of filing: 10.07.2020
(51) Int. Cl.: G06T 15/06, G06T 15/50

(54) **RENDERING METHOD AND RENDERING DEVICE PERFORMING THE SAME**
GRAFIKDARSTELLUNGSVERFAHREN UND GERÄT ZU DESSEN DURCHFÜHRUNG
PROCÉDÉ DE RENDU ET DISPOSITIF DE RENDU LE METTANT EN OEUVRE

(30) Priority: 15.07.2019 KR 20190085396
(43) Date of publication of application: 25.05.2022
(73) Proprietor: LEGO A/S, 7190 Billund (DK)
(72) Inventor: PARK, Hyeonho, 7190 Billund (DK); YEO, Yeon-Mi, 7190 Billund (DK); LEE, Dongkyoo, 7190 Billund (DK); HA, Hyung-Jin, 7190 Billund (DK); JUNG, Yeon-Gyu, 7190 Billund (DK); KIM, Bo-Woo, 7190 Billund (DK)
(74) Representative: Guardian IP Consulting I/S
(86) International application number: PCT/EP2020/069549
(87) International publication number: WO 2021/009044

(56) References cited:
- US-B2- 8 525 826
- US-B2- 8 525 826

## Description

### Technical Field

The present disclosure relates to a rendering method for generating an image, and more particularly, a rendering method for generating an image of an assembling toy formed by coupling assembling elements, and a rendering device performing the same.

### Background Art

Assembling toys, such as LEGO, have been loved as playthings for decades. Assembling toys have been popularized not only for children but also for adults because several assembling elements, which are standardized and highly compatible, can be assembled to make toys of various shapes.

Meanwhile, demand for services for showing a 3D photorealistic image of a completed assembling toy to a user through a display device has been increasing. In addition, along with the development of graphics card technology, research is actively being conducted on generating real-time 3D images of assembling toys using ray tracing.

US 8,525,826 B2 describes a method for iterative interactive ray tracing in a multiprocessor environment. The method comprises receiving scene model data including a scene geometry model and a plurality of pixel data describing objects arranged in a scene. The method generates a primary ray based on a selected first pixel data. In the event the primary ray intersects an object in the scene, the method determines primary hit color data and generates a plurality of secondary rays. The method groups the secondary packets and arranges the packets in a queue based on the octant of each direction vector in the secondary ray packet. The method generates secondary color data based on the secondary ray packets in the queue and generates a pixel color based on the primary hit color data, and the secondary color data. The method generates an image based on the pixel color for the pixel data.

### Disclosure of the Invention

### Technical tasks to be solved by the invention

A task of the present disclosure is to provide an image generating method for an assembling toy including a transparent assembling element.

Another task of the present disclosure is to provide a method of clearly rendering another assembling element behind the transparent assembling element.

Yet another task of the present disclosure is to provide a rendering method capable of preventing an increase in the amount of computation for ray tracing.

Still another task of the present disclosure is to provide a method of effectively rendering an assembling element of a milky or pearl material.

Technical tasks to be achieved in the present disclosure are not limited to the above described tasks, and other technical tasks that have not been mentioned may be clearly understood by those of ordinary skill in the art from the present disclosure and the accompanying drawings.

### Technical solution

An aspect of the present disclosure may provide a rendering method and device for generating an image of an assembling toy formed by coupling a plurality of assembling elements arranged in a virtual space, the rendering method including placing a virtual camera, which is an origin of a ray of light traveling in the virtual space, in the virtual space; emitting a virtual ray from the virtual camera; and determining a pixel value of a pixel corresponding to the virtual ray among pixels of the image in consideration of characteristic information of a transparent assembling element when the virtual ray hits the transparent assembling element among the plurality of assembling elements wherein the characteristic information includes at least a transmittance albedo and a reflectance albedo, wherein when the virtual ray hits a first transparent assembling element and a second transparent assembling element, and the determining a pixel value of a pixel comprises: acquiring a final transmittance albedo in consideration of a transmittance albedo of the first transparent assembling element and a transmittance albedo of the second transparent assembling element, acquiring, as a final reflectance albedo, a reflectance albedo of a transparent assembling element which the virtual ray emitted from the virtual camera hits first wherein the reflectance albedo is one of a reflectance albedo of the first transparent assembling element and a reflectance albedo of the second transparent assembling element, and determining the pixel value based on the final transmittance albedo and the final reflectance albedo.

The invention is set out in the appended set of claims.

### Advantageous effects

According to the present disclosure, it is possible to generate an image of an assembling toy including a transparent assembling element.

Further, according to the present disclosure, it is possible to clearly render another assembling element behind the transparent assembling element.

Furthermore, according to the present disclosure, it is possible to perform rendering while preventing an increase in the amount of computation for ray tracing.

Furthermore, according to the present disclosure, it is possible to effectively render an assembling element of a milky or pearl material.

Effects of the present disclosure are not limited to the above described effects, and other effects that have not been mentioned may be clearly understood by those of skill in the art from the present disclosure and the accompanying drawings.

### Brief Description of Drawings

FIG. 1 is a diagram showing a rendering system according to an embodiment of the present disclosure.
FIG. 2 is a diagram illustrating a ray tracing operation according to an embodiment of the present disclosure.
FIG. 3 is a diagram illustrating a noise processing operation according to an embodiment of the present disclosure.
FIG. 4 is a diagram illustrating a noise processing operation according to an embodiment of the present disclosure.
FIG. 5 is a diagram illustrating a noise processing operation according to another embodiment of the present disclosure.
FIG. 6 is a flowchart illustrating a method of accumulating a transmittance albedo according to an embodiment of the present disclosure.
FIG. 7 is a diagram showing multiple reflections between assembling elements.
FIG. 8 is a graph illustrating a virtual ray drop method according to an embodiment.
FIG. 9 is a graph illustrating a virtual ray drop method according to another embodiment.
FIG. 10 is a diagram showing a first image rendered according to an embodiment.
FIG. 11 is a diagram showing a second image M2 acquired from a first image M1 of FIG. 10 by adjusting a pixel value of the first image M1.
FIG. 12 is a diagram showing a third image M3 acquired from a first image M1 of FIG. 10 by clamping a pixel value of the first image M1.
FIG. 13 is a diagram illustrating subscattering phenomenon in an assembling element.
FIG. 14 is a diagram illustrating a rendering method according to an embodiment. Modes for Carrying Out the Invention

Embodiments described in the present disclosure have been made to clearly explain the concept of the present disclosure to those having ordinary skill in the art, and thus the present disclosure is not limited to the embodiments described in the present disclosure.

The terms used in the present disclosure are selected from general terms, which are currently widely used, on the basis of functions in the present disclosure, and may vary according to the intent of those of ordinary skill in the art, the custom in the field of art, or the advance of new technology. When a specific term is defined and used with an arbitrary meaning, the meaning of the term will be described separately. Accordingly, the terms used in the present disclosure should be interpreted on the basis of the actual meanings of the terms and the entire description of the present disclosure, rather than the simple names of such terms.

The accompanying drawings in the present disclosure are for facilitating the description of the present disclosure. The shapes illustrated in the drawings may be exaggerated for the purpose of convenience of explanation, so the present disclosure is not limited to the drawings.

In the present disclosure, a detailed description of related known functions or configurations incorporated herein will be omitted as necessary when it may render the subject matter of the disclosure rather unclear.

According to an embodiment, there may be provided a rendering method for generating an image of an assembling toy formed by coupling a plurality of assembling elements arranged in a virtual space, the rendering method including placing a virtual camera, which is an origin of a ray of light traveling in the virtual space, in the virtual space; emitting a virtual ray from the virtual camera; and determining a pixel value of a pixel corresponding to the virtual ray among pixels of the image in consideration of characteristic information of a transparent assembling element when the virtual ray hits the transparent assembling element among the plurality of assembling elements wherein the characteristic information includes at least a transmittance albedo and a reflectance albedo, wherein, when the virtual ray hits a first transparent assembling element and a second transparent assembling element, the determining comprises: acquiring a final transmittance albedo in consideration of a transmittance albedo of the first transparent assembling element and a transmittance albedo of the second transparent assembling element, acquiring, as a final reflectance albedo, a reflectance albedo of a transparent assembling element which the virtual ray emitted from the virtual camera hits first wherein the reflectance albedo is one of a reflectance albedo of the first transparent assembling element and a reflectance albedo of the second transparent assembling element, and determining the pixel value based on the final transmittance albedo and the final reflectance albedo.

In another embodiment, when the first transparent assembling element includes a first face and a second face, the acquiring of final transmittance albedo may include acquiring the final transmittance albedo in consideration of a transmittance albedo of the first face and a transmittance albedo of the second face.

In still another embodiment, when the transparent assembling element hit first includes a first face and a second face, the acquiring of a final reflectance albedo may include acquiring, as the final reflectance albedo, a reflectance albedo of a face which is one of the first face and the second face and which the virtual ray emitted from the virtual camera hits first.

In yet another embodiment, the determining of a pixel value may include calculating a final albedo based on the final transmittance albedo and the final reflectance albedo.

In yet another embodiment, the final albedo may be calculated based on a value obtained by multiplying the final transmittance albedo by the final reflectance albedo.

In yet another embodiment, the determining of a pixel value may include determining the pixel value based on a normal and depth value of a transparent assembling element which is one of the first transparent assembling element and the second transparent assembling element and which the virtual ray emitted from the virtual camera hits first.

In yet another embodiment, the rendering method may further include accumulating roughness of the first transparent assembling element and roughness of the second transparent assembling element; and stopping the acquisition of the final transmittance albedo when the accumulated roughness is greater than predetermined roughness.

In yet another embodiment, when a transparent assembling element which the virtual ray emitted from the virtual camera hits first is the first transparent assembling element and a transparent assembling element which the virtual ray emitted from the virtual camera hits second is the second transparent assembling element, the predetermined roughness may be determined based on first roughness of the first transparent assembling element and second roughness of the second transparent assembling element.

In yet another embodiment, the predetermined roughness is an intermediate value of the first roughness and the second roughness.

In yet another embodiment, the rendering method may further include accumulating the number of times the virtual ray hits the transparent assembling element; and stopping the acquisition of the final transmittance albedo when the accumulated number of times is greater than or equal to a predetermined number.

In a non-claimed example, there may be provided a rendering method for generating an image of an assembling toy formed by coupling a plurality of assembling elements arranged in a virtual space, the rendering method including placing a virtual camera, which is an origin of a ray of light traveling in the virtual space, in the virtual space; emitting a virtual ray from the virtual camera; detecting an event in which the virtual ray hits a first assembling element and a second assembling element wherein the virtual ray hits the second assembling element after hitting the first assembling element; and determining a pixel value of a pixel corresponding to the virtual ray among pixels of the image based on a transmittance albedo and a reflectance albedo of the first assembling element when the first assembling element is a transparent assembling element.

In another example, the determining of a pixel value may include determining the pixel value in consideration of a transmittance albedo of the second assembling element.

In another example, the determining of a pixel value may include determining the pixel value based on the final transmittance albedo calculated by accumulating the first transmittance albedo and the second transmittance albedo.

In another example, the final transmittance albedo may be calculated by multiplying a value obtained by accumulating the first transmittance albedo and the second transmittance albedo by the reflectance albedo of the first assembling element.

In yet another embodiment, there may be provided a rendering device including a storage unit configured to store characteristic information of a plurality of assembling elements arranged in a virtual space wherein the characteristic information includes at least a transmittance albedo and a reflectance albedo; and a control unit configured to generate an image of an assembling toy formed by coupling the plurality of assembling elements in consideration of the characteristic information stored in the storage unit, wherein when a virtual ray emitted from a virtual camera which is disposed in the virtual space and is an origin of a ray of light traveling in the virtual space hits a transparent assembling element among the plurality of assembling elements, the control unit determines a pixel value of a pixel corresponding to the virtual ray among pixels of the image in consideration of characteristic information of the transparent assembling element wherein the characteristic information includes at least a transmittance albedo and a reflectance albedo, and wherein when the virtual ray hits a first transparent assembling element and a second transparent assembling element, the control unit acquires a final transmittance albedo in consideration of a transmittance albedo of the first transparent assembling element and a transmittance albedo of the second transparent assembling element, acquires, as a final reflectance albedo, a reflectance albedo of a transparent assembling element which the virtual ray emitted from the virtual camera hits first wherein the reflectance albedo is one of a reflectance albedo of the first transparent assembling element and a reflectance albedo of the second transparent assembling element, and determines the pixel value based on the final transmittance albedo and the final reflectance albedo.

In yet another embodiment, there may be provided a computer-readable recording medium storing a computer program for generating an image of an assembling toy formed by coupling a plurality of assembling elements arranged in a virtual space, the computer-readable recording medium comprising a computer program that, when a virtual ray hits a transparent assembling element among the plurality of assembling elements, determines a pixel value of a pixel corresponding to the virtual ray among pixels of the image in consideration of characteristic information of the transparent assembling element wherein the characteristic information includes at least a transmittance albedo and a reflectance albedo, wherein when the virtual ray hits a first transparent assembling element and a second transparent assembling element, the computer program comprises program code configured to acquire a final transmittance albedo in consideration of a transmittance albedo of the first transparent assembling element and a transmittance albedo of the second transparent assembling element, program code configured to acquire, as a final reflectance albedo, a reflectance albedo of a transparent assembling element which the virtual ray emitted from the virtual camera hits first wherein the reflectance albedo is one of a reflectance albedo of the first transparent assembling element and a reflectance albedo of the second transparent assembling element, and program code configured to determine the pixel value based on the final transmittance albedo and the final reflectance albedo.

The present disclosure describes a method of generating an image of an assembling toy made by virtually connecting assembling elements, a method of rendering an assembling toy made in a virtual space in a photorealistic form, and a computer program product for the same.

Three-dimensional (3D) rendering refers to image processing for combining 3D model data into an image visible from a camera viewpoint. A rendering method includes a rasterization method that generates an image while projecting a 3D model onto a screen, a ray tracing method that generates an image by tracing a path of light incident along a line toward each pixel of an image from a camera viewpoint, and so on.

The above-described methods in the present disclosure may be performed in a virtual space where an assembling toy or assembling elements are virtually implemented. For example, a virtual space where a user can make an assembling toy of a desired design in advance by placing or connecting virtual assembling elements, which simulate real assembling elements, may be provided in the present disclosure.

Hereinafter, terms used in the present disclosure will be defined.

As described above, the term "virtual space" refers to a space where an act of making an assembling toy or connecting assembling elements in a real space can be virtually performed. Such a virtual space may be implemented through a computer or similar equipment and may be displayed as an image to a user through a visual interface including a display.

In the virtual space, the assembling elements may be placed. Also, the assembling elements placed in the virtual space may be connected to each other. By using such a virtual space, a user can reduce mistakes or difficulties in directly handling assembling elements in the real space and can try to assemble an assembling toy with a desired design in advance.

The virtual space is provided as a 3D space and thus may have 3D coordinates. Accordingly, assembling elements in the virtual space may be placed at 3D coordinates of specific positions. Thus, position data of the assembling elements, which indicate positions of the assembling elements in the virtual space, may be provided. Meanwhile, the assembling elements may have specific orientations in the virtual space. Thus, orientation data of the assembling elements, which indicate the orientations of the assembling elements in the virtual space, may be provided.

Meanwhile, a virtual camera may be placed in the virtual space. The virtual camera may emit a virtual ray toward an assembling toy or an assembling element disposed in a virtual space or may acquire a virtual ray emitted from a virtual light source. The virtual camera may be an origin of virtual rays traveling in the virtual space. Alternatively, the virtual camera may be a reference start point in the virtual space.

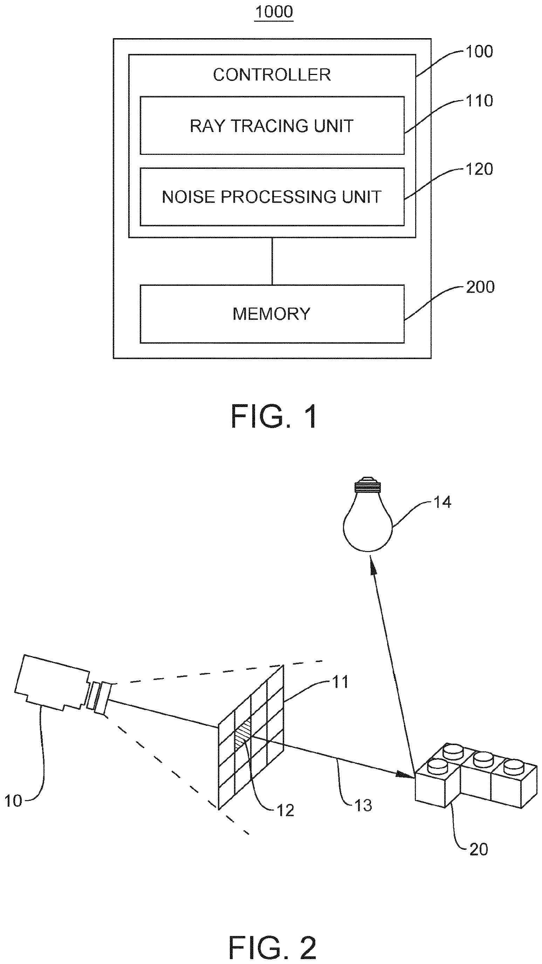

FIG. 1 is a diagram showing a rendering system 1000 according to an embodiment of the present disclosure.

Referring to FIG. 1, the system 1000 may include a controller 100 and a memory 200. The controller 100 may include a ray tracing unit 110 and a noise processing unit 120.

The controller 100 may perform processing and computation on various kinds of information and may control other elements included in the system 1000. The controller 100 may be provided in the form of an electronic circuit that physically processes electrical signals. The system 1000 may physically include only a controller 100, but may alternatively include a plurality of controllers 100. For example, the controller 100 may be one or a plurality of processors installed in one personal computer. As another example, the controller 100 may be provided as processors installed in physically separated servers and terminals to collaborate through communication.

Various steps and operations for ray tracing, noise processing, and the like to be described below as well as the above-described implementation of the virtual space, placement of assembling elements in the virtual space, and connection of assembling elements may be performed by the controller 100. Also, an operation of storing various kinds of data in the memory 200, acquiring various kinds of data from the memory 200, or the like may be performed under the control of the controller 100. Various kinds of operations or steps disclosed in embodiments of the present disclosure may be interpreted as being performed by the controller 100 unless otherwise stated.

The ray tracing unit 110 may perform a ray tracing operation. Here, the ray tracing operation is an operation of tracing a virtual ray in order to generate an image of a predetermined object and may refer to a forward ray tracing operation for tracing a ray that is incident on a virtual camera from a light source disposed in a virtual space and a reverse ray tracing operation for tracing a virtual ray that is emitted from the virtual camera and reaches a light source. For convenience of description, the following description will focus on the reverse ray tracing operation.

During the ray tracing process, an operation of collecting characteristics related to an object which a virtual ray hits may be performed. During the ray tracing process, operations such as shading, clipping, and hidden-surface processing may be performed.

The noise processing unit 120 may correct image data acquired through the ray tracing unit 110. For example, the noise processing unit 120 may correct color data and brightness data included in the image data.

Various kinds of information may be provided to the memory 200. For example, position data indicating the coordinates of an assembling element disposed in the virtual space or orientation data indicating the orientation of an assembling element disposed in the virtual space may be stored in the memory 200. As another example, denoising data that is used for noise processing of image data acquired through the ray tracing operation to be described below may be stored in the memory 200. Information stored in the memory 200 may be used by the controller 100 to perform various kinds of operations. In the present disclosure, the memory 200 should be interpreted as a comprehensive concept including volatile memories such as a random access memory (RAM) and non-volatile memories such as a hard disk or a flash disk.

The controller 100 may acquire image data relating to assembling elements arranged in the virtual space using data stored in the memory 200. For example, feature information of the assembling elements may be stored in the memory 200. The feature information may include the color, depth, and normal of a virtual ray. Alternatively, the feature information may include transmittance albedo, reflectance albedo, and surface roughness of an object disposed in the virtual space.

The controller 100 may store data acquired through the ray tracing operation in the memory 200 or update the data. The acquired data may correspond to the feature information.

The rendering system 1000 may be implemented in the form of a graphics card or other various chips.

FIG. 2 is a diagram illustrating a ray tracing operation according to an embodiment of the present disclosure.

Referring to FIG. 2, a virtual camera 10, a light source 14, and an assembling toy 20 may be disposed in the virtual space.

The virtual camera 10 may generate or emit a virtual ray 13 to each pixel of a screen 11. The virtual camera 10 may generate or emit a plurality of virtual rays to each pixel. For example, the virtual camera 10 may generate or emit N virtual rays to pixel A 12. As the number of generated or emitted virtual rays increases, the amount of computation for the ray tracing may increase while noise may decrease.

Each pixel of the screen 11 may include sub-pixels. For example, pixel A 12 may include a plurality of sub-pixels. A region of pixel A 12 may be split into a plurality of sub-pixels.

The virtual camera 10 may generate or emit virtual rays 13 to at least some of the plurality of sub-pixels. At least some of the sub-pixels may be determined in a random manner.

As the number of sub-pixels for which the virtual rays 13 are generated or emitted among the plurality of sub-pixels increases, ray tracing noise may be further decreased.

The screen 11 may include a plurality of pixels. For example, the screen 11 may include 12 pixels of 3×4. This is merely an example, and the screen 11 may have pixels provided in various forms and numbers.

The screen 11 may correspond to an image displayed to a user. For example, the pixels of the screen 11 may correspond respectively to the pixels of the image on a one-to-one basis or on a one-to-many basis.

The virtual ray 13 may hit the assembling toy 20. The virtual ray 13 may arrive at the light source 14 after hitting the assembling toy 20. The controller 100 may detect the collision event and the arrival event. The controller 100 may acquire the number of rays that reach the light source 14.

The controller 100 may calculate a pixel value of the image based on the number of rays that reach the light source 14. For example, when N virtual rays are emitted from the virtual camera 10 to pixel A 12, M virtual rays (here, M is smaller than N) may reach the light source 14. In this case, the controller 100 may calculate the pixel value of the image in consideration of N and M. As the ratio of the number of virtual rays that reach the light source 14 to the number of virtual rays emitted from the virtual camera 10 increases, the corresponding pixel value may increase.

Meanwhile, the operation of the controller 100 may be performed by the ray tracing unit 110. Also, for convenience of description, although only a virtual ray that has passed through pixel A 12 has been described, it will be appreciated that the above description may be applied to virtual rays that pass through the other pixels of the screen 11.

The assembling toy 20 may be provided in various forms. For example, the assembling toy 20 may be provided in a block form including a stud or may be provided in various other forms. The assembling toy 20 may include a plurality of assembling elements.

The number of virtual rays 13 that reach the light source 14 may vary depending on the position and characteristics (including the shape, material, color, etc.) of the assembling toy 20.

Data on the above-described virtual camera 10, light source 14, and assembling toy 20 may be stored in the memory 200. The data may include position data and feature data relating to each of the virtual camera 10, the light source 14, and the assembling toy 20.

The controller 100 may calculate the pixel value of the image based on the data relating to the virtual camera 10, the light source 14, and the assembling toy 20, which is stored in the memory 200.

Meanwhile, since the total amount of ray tracing computation increases as the number of sampled virtual rays 13 increases, image data acquired through the ray tracing may be corrected by reducing the number of sampled virtual rays and by using the characteristics of objects acquired through the ray tracing process.

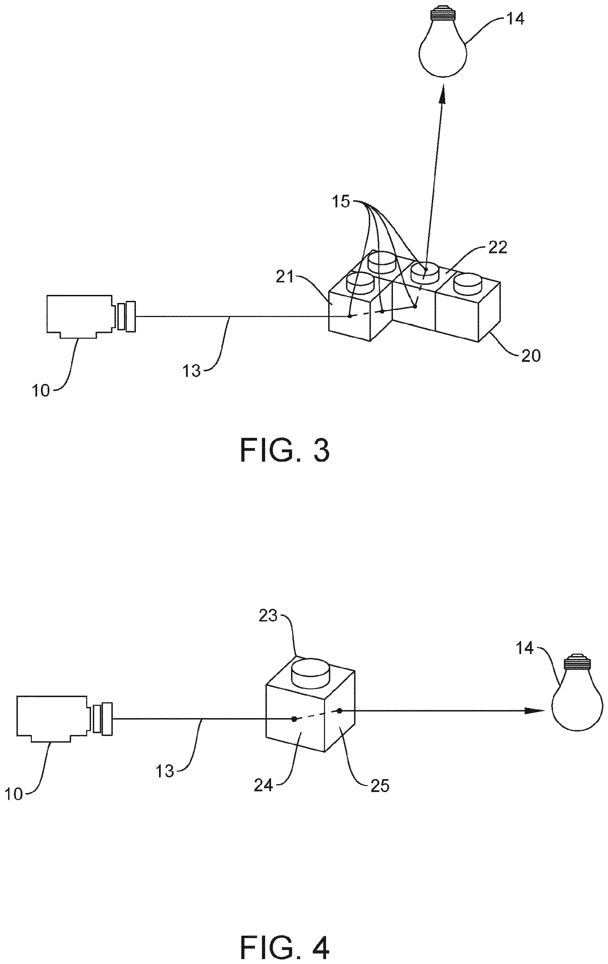

FIG. 3 is a diagram illustrating a noise processing operation according to an embodiment of the present disclosure.

Referring to FIG. 3, a virtual camera 10, a light source 14, and an assembling toy 20 may be provided in the virtual space.

The assembling toy 20 may include a plurality of assembling elements. A first assembling element 21 and a second assembling element 22 may be provided as transparent assembling elements. Here, the transparent assembling element may refer to an assembling element through which a virtual ray can be transmitted or through which a virtual ray can pass. Alternatively, the transparent assembling element may refer to an assembling element with a visible light transmittance greater than or equal to a predetermined range, that is, an assembling element having a light transmittance sufficient to see other assembling elements or objects disposed behind the assembling element with the naked eye.

A virtual ray 13 generated or emitted from the virtual camera 10 may reach the light source 14 after passing through the first assembling element 21 and the second assembling element 22. The virtual ray 13 may reach the light source 14 after passing through a plurality of intersection points 15.

The controller 100 may acquire feature data of assembling elements including the intersection points 15. The feature data may include depth, normal, transmittance albedo, reflectance albedo, and roughness.

The controller 100 may acquire the feature data from the memory 200.

The noise processing unit 120 may acquire feature data of the first assembling element 21 and the second assembling element 22 at the intersection points 15. The noise processing unit 120 may use the acquired feature data to correct the image data generated through the ray tracing or to remove noise generated during the ray tracing process. Alternately, the noise processing unit 120 may use the acquired data to generate image data.

Meanwhile, the noise processing unit 120 may use the acquired data to generate image data in various ways.

FIG. 4 is a diagram illustrating a noise processing operation according to an embodiment of the present disclosure.

Referring to FIG. 4, a virtual ray 13 emitted from the virtual camera 10 may reach the light source 14 after passing through a third assembling element 23. The virtual ray 13 emitted from the virtual camera 10 may pass through a first face 24 and a second face 25 with which the third assembling element 23 collides.

The third assembling element 23 may be provided as a transparent assembling element.

The noise processing unit 120 may generate second image data using feature data of the third assembling element 23, the first face 24, and the second face 25 based on first image data acquired through the ray tracing operation.

For example, the noise processing unit 120 may generate the second image data using depth and normal information of the first face 24, which is a face that the virtual ray 13 hits first. That is, the noise processing unit 120 may not use depth and normal information of the second face 25 when generating the second image data. This is because it is difficult to calculate information relating to several faces as one value while maintaining the consistency of depth and normal information.

Thus, the total amount of computation required to generate image data may be decreased.

The noise processing unit 120 may use the reflectance albedo of the third assembling element 23 to generate the second image data.

For example, the noise processing unit 120 may use the reflectance albedo of the first face 24 to generate the second image data. That is, the noise processing unit 120 may use only the reflectance albedo of the first face 24 without using the reflectance albedo of the second face 25 while generating the second image data. The reflectance albedo of the first face 24 may be a final reflectance albedo. This is because the reflectance albedo of the face which the virtual ray hits first is likely to be a characteristic in an actual rendering result.

Thus, the total amount of computation required to generate image data may be decreased. This is because in order to calculate the second image data, the reflectance albedo of the faces other than the face which the virtual ray hits first need not be considered.

Meanwhile, the noise processing unit 120 may use both the reflectance albedo of the first face 24 and the second face 25 to generate the second image data in order to minimize the noise of the first image data. A final reflectance albedo may be calculated by adding the reflectance albedo of the first face 24 and the reflectance albedo of the second face 25.

The noise processing unit 120 may use the transmittance albedo of the third assembling element 23 to generate the second image data.

For example, the noise processing unit 120 may use a first transmittance albedo of the first face 24 and a second transmittance albedo of the second face 25 to generate the second image data. The noise processing unit 120 may calculate a final transmittance albedo by accumulating the first transmittance albedo and the second transmittance albedo.

The noise processing unit 120 may calculate the final transmittance albedo by multiplying the first transmittance albedo and the second transmittance albedo by respective weights and then accumulating the first transmittance albedo and the second transmittance albedo. The weight by which the first transmittance albedo is multiplied may be the same as or different from the weight by which the second transmittance albedo is multiplied.

A final albedo may be calculated based on the final reflectance albedo and the final transmittance albedo. For example, the final albedo may be a sum of the final reflectance albedo multiplied by a predetermined coefficient and the final transmittance albedo multiplied by a predetermined coefficient. Here, the predetermined coefficients may be Fresnel coefficients.

The final transmittance albedo used to calculate the final albedo may be calculated by multiplying a value obtained by accumulating the first transmittance albedo and the second transmittance albedo by the final reflectance albedo.

The noise processing unit 120 may generate the second image data based on the final albedo, depth, and normal.

Meanwhile, the types of data of the first face 24 and the second face 25 used to generate the second image data may be different. For example, the noise processing unit 120 may use the depth, normal, reflectance albedo, and transmittance albedo of the first face 24 to generate the second image data, and may also use the transmittance albedo of the second face 25 to generate the second image data.

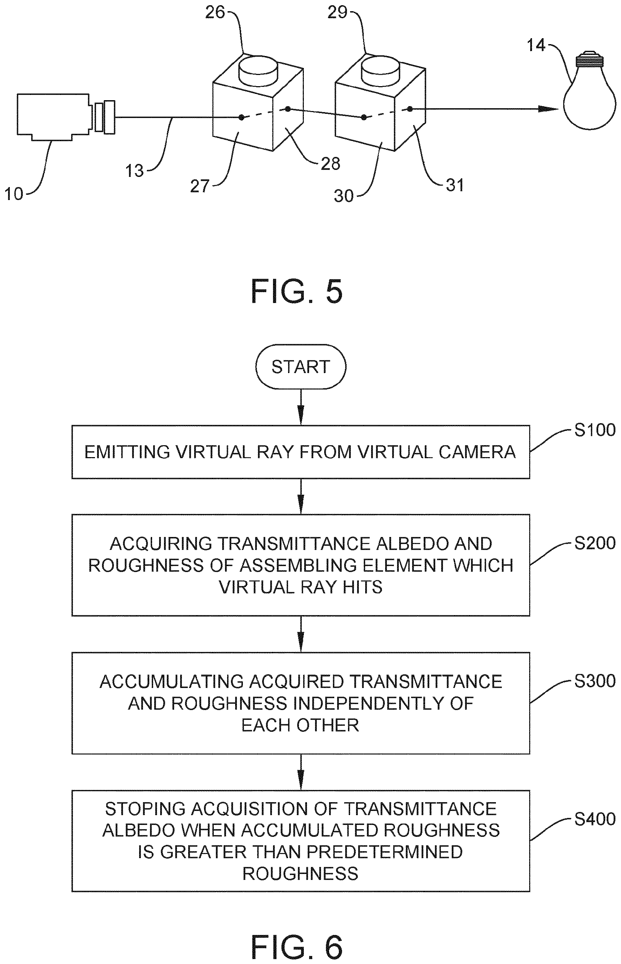

FIG. 5 is a diagram illustrating a noise processing operation according to another embodiment of the present disclosure.

Referring to FIG. 5, a virtual ray 13 emitted from the virtual camera 10 may reach the light source 14 after passing through a fourth assembling element 26 and a fifth assembling element 29. The virtual ray 13 emitted from the virtual camera 10 may pass through a third face 27 and a fourth face 28 with which the fourth assembling element 26 collides, and a fifth face 30 and a sixth face 31 with which the fifth assembling element 29 collides.

The fourth assembling element 26 and the fifth assembling element 29 may be provided as transparent assembling elements.

The fifth assembling element 29 may be located on the opposite side of the virtual camera 10 with respect to the fourth assembling element 26. Accordingly, the fifth assembling element 29 may be located behind the fourth assembling element 26 from the viewpoint of the virtual camera 10.

The fifth assembling element 29 may be spaced apart from the fourth assembling element 26. Alternatively, the fifth assembling element 29 may be brought into contact with the fourth assembling element 26 to share one face.

The ray tracing unit 110 may generate third image data including the fourth assembling element 26 and the fifth assembling element 29. The noise processing unit 120 may generate fourth image data from the third image data using feature data of the fourth assembling element 26 and the fifth assembling element 29.

A method of generating the fourth image data will be described below.

The noise processing unit 120 may generate image data using the depth, normal, reflectance albedo, and transmittance albedo of an assembling element.

For example, the noise processing unit 120 may generate the fourth image data using the depth and normal information of the third face 27, which is a face which the virtual ray 13 hits first. That is, the noise processing unit 120 may not use the depth and normal information of the fourth to sixth faces 28, 30, and 31 when generating the fourth image data. This is because it is difficult to calculate information relating to several faces as one value while maintaining the consistency of depth and normal information.

Thus, the total amount of computation required to generate image data may be decreased.

The noise processing unit 120 may use the reflectance albedo of the fourth assembling element 26 to generate the fourth image data.

For example, the noise processing unit 120 may use the reflectance albedo of the third face 27 to generate the fourth image data. That is, the noise processing unit 120 may use only the reflectance albedo of the third face 27 without using the reflectance albedo of the fourth to sixth faces 28, 30, and 31 while generating the fourth image data. In this case, a final reflectance albedo may be calculated based on the reflectance albedo of the third face 27. This is because the reflectance albedo of the face which the virtual ray hits first is likely to be a characteristic in an actual rendering result.

Thus, the total amount of computation required to generate image data may be decreased. This is because in order to calculate the fourth image data, the reflectance albedo of the faces other than the face which the virtual ray hits first need not be considered.

Meanwhile, the noise processing unit 120 may use all the reflectance albedo of the third to sixth faces 27, 28, 30, and 31 to generate the fourth image data in order to minimize the noise of the fourth image data. Alternatively, the noise processing unit 120 may use the reflectance albedo of at least two of the third to sixth faces 27, 28, 30, and 31 to generate the fourth image data.

The noise processing unit 120 may use the transmittance albedo of the fourth assembling element 26 and the fifth assembling element 29 to generate the fourth image data.

For example, the noise processing unit 120 may use a third transmittance albedo of the third face 27, a fourth transmittance albedo of the fourth face 28, a fifth transmittance albedo of the fifth face 30, and a sixth transmittance albedo of the sixth face 31 to generate the fourth image data. The noise processing unit 120 may calculate a final transmittance albedo by adding the third transmittance albedo, the fourth transmittance albedo, the fifth transmittance albedo, and the sixth transmittance albedo. The noise processing unit 120 may multiply the third transmittance albedo, the fourth transmittance albedo, the fifth transmittance albedo, and the sixth transmittance albedo by respective weights and then add the product to accumulate the third transmittance albedo, the fourth transmittance albedo, the fifth transmittance albedo, and the sixth transmittance albedo multiplied by the weights. The weights by which the third transmittance albedo, the fourth transmittance albedo, the fifth transmittance albedo, and the sixth transmittance albedo are multiplied may be the same as or different from each other.

A final albedo may be calculated based on the final reflectance albedo and the final transmittance albedo. For example, the final albedo may be a sum of the final reflectance albedo multiplied by a predetermined coefficient and the final transmittance albedo multiplied by a predetermined coefficient. Here, the predetermined coefficients may be Fresnel coefficients. However, the present disclosure is not limited thereto, and the predetermined coefficients may include other coefficients.

The final transmittance albedo used to calculate the final albedo may be calculated by multiplying a value obtained by accumulating the third transmittance albedo, the fourth transmittance albedo, the fifth transmittance albedo, and the sixth transmittance albedo by the final reflectance albedo.

The noise processing unit 120 may generate the fourth image data based on the final albedo.

Meanwhile, the types of data of the third to sixth faces 27, 28, 30, and 31 used to generate the fourth image data may be different. For example, the noise processing unit 120 may use the depth, normal, reflectance albedo, and transmittance albedo of the third face 27 to generate the fourth image data, and may also use the transmittance albedo of the fourth to sixth faces 28, 30, and 31 to generate the fourth image data.

Meanwhile, when transmittance albedo is accumulated without limitation each time a virtual ray transmission step increases, feature information of an assembling element may be complicated, and unintended noise may occur in image data that is finally acquired.

Hereinafter, a method of accumulating transmittance albedo will be described.

FIG. 6 is a flowchart illustrating a method of accumulating transmittance albedo according to an embodiment of the present disclosure.

Referring to FIG. 6, the transmittance albedo accumulation method may include emitting a virtual ray from a virtual camera (S100), acquiring transmittance albedo and roughness of an assembling element which the virtual ray hits (S200), accumulating the acquired transmittance albedo and the roughness independently of each other (S300), and stopping the acquisition of the transmittance albedo when the accumulated roughness is greater than predetermined roughness (S400).

Each step will be described in detail below.

The virtual camera may emit a virtual ray (S100).

The virtual camera may emit multiple virtual rays to a specific pixel of an image in the same direction. The virtual camera may emit multiple virtual rays to each pixel of an image.

The controller 100 may adjust the number of virtual rays emitted by the virtual camera.

The controller 100 may acquire the transmittance albedo and roughness of an assembling element which the virtual ray hits (S200) and accumulate the transmittance albedo and the roughness independently of each other (S300). Here, the roughness may refer to the roughness of the surface of an object. Accordingly, when the assembling element has a plurality of faces, the controller 100 may acquire and accumulate the roughness of each of the plurality of faces.

The controller 100 may detect a collision event in which a virtual ray hits an assembling element. The controller 100 may acquire the transmittance albedo of the assembling element which the virtual ray hits in response to the collision event. The transmittance albedo acquired as described above may be accumulated.

The controller 100 may acquire the roughness of the assembling element which has been hit.

The controller 100 may accumulate the acquired roughness. A separate parameter for accumulating the roughness may be provided.

The controller 100 may accumulate the roughness in various ways. The controller 100 may multiply the roughness of a face which the virtual ray hits by a weight. The weight may be set differently depending on the sequence number of the surface which the virtual ray hits.

The controller 100 may stop the acquisition of the transmittance albedo when the accumulated roughness is greater than predetermined roughness (S400).

This is because when the accumulated roughness is greater than a predetermined value, the image appears blurry and there is no need to consider the transmittance albedo feature.

The predetermined roughness may be determined in various ways. For example, an intermediate value of a first roughness value of a face which the virtual ray hits first and a second roughness value of a face which the virtual ray hits second may be set as the predetermined roughness.

Meanwhile, when the accumulated roughness is greater than the predetermined roughness, the controller 100 may continue to acquire the transmittance albedo but may stop the accumulation.

Alternatively, when the accumulated roughness is greater than the predetermined roughness, the controller 100 may continue to acquire and accumulate the transmittance albedo, but may no longer consider the acquired and accumulated transmittance albedo when generating image data.

It has been described above that the controller 100 stops the acquisition of the transmittance albedo based on the roughness of an assembling element. However, the controller 100 may stop the acquisition of the transmittance albedo based on another parameter.

The parameter may be the number of faces through which the virtual ray passes. That is, the controller 100 may determine whether to acquire or accumulate the transmittance albedo based on the number of faces through which the virtual ray passes. Alternatively, the parameter may be the number of assembling elements through which the virtual ray passes.

For example, the controller 100 may accumulate the transmittance albedo until the virtual ray hits two assembling elements. That is, the controller 100 may accumulate the transmittance albedo of an assembling element which the virtual ray hits first and the transmittance albedo of an assembling element which the virtual ray hits second, and may not acquire or accumulate the transmittance albedo of an assembling element which the virtual ray hits third.

Meanwhile, multiple reflections or multiple transmissions of the virtual ray may occur between the plurality of assembling elements. For example, a virtual ray transmitted through one transparent assembling element may be reflected after hitting another transparent assembling element and then may hit the one transparent assembling element again.

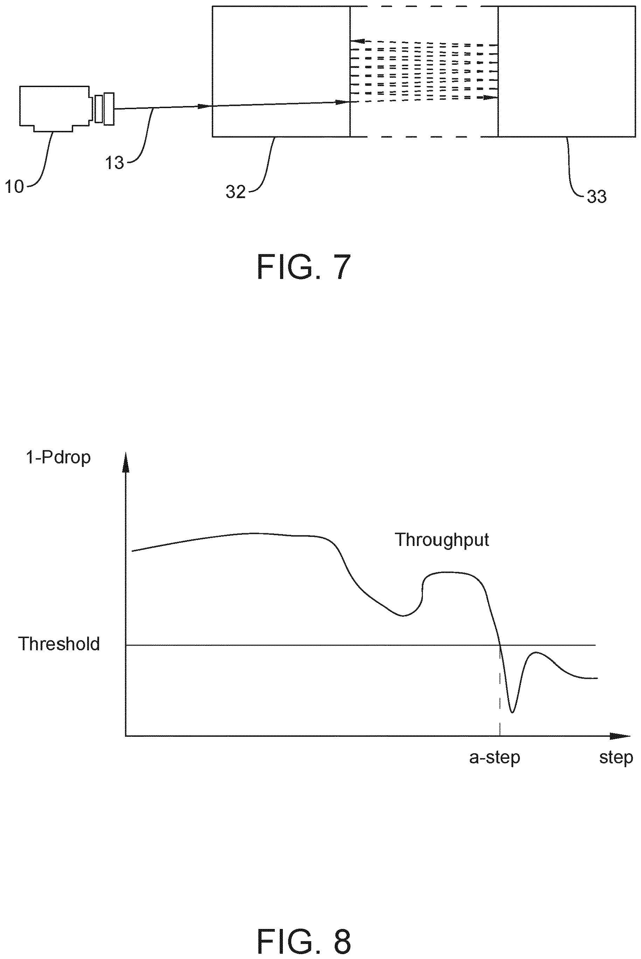

Referring to FIG. 7, a virtual ray 13 emitted from the virtual camera 10 may be reflected multiple times between a sixth assembling element 32 and a seventh assembling element 33. When multiple reflections or multiple transmissions of the virtual ray occur between a plurality of assembling elements, the amount of computation for a tracing operation for the corresponding virtual ray increases.

Also, when reducing the number of multiple reflections or transmissions in which the ray tracing operation is to be performed to prevent an increase in the amount of computation, a transparent assembling element may be rendered black because illumination due to multiple reflections or transmissions is not properly handled.

Accordingly, there is a need for a method of processing multiple reflections between a plurality of assembling elements.

According to an embodiment, when the virtual ray is reflected or transmitted between two assembling elements more than a predetermined number of times, the corresponding virtual ray may be dropped. Here, the virtual ray being dropped may indicate that the computation for the corresponding virtual ray is no longer performed. Alternatively, the virtual ray being dropped may indicate that the controller 100 generates a command signal to stop the ray tracing operation for the virtual ray. Meanwhile, the virtual ray being dropped may mean that the controller 100 stops a tracing operation for a specific virtual ray rather than that the controller 100 stops the entirety of a ray tracing operation being performed.

There are several ways to drop a virtual ray. For example, a Russian roulette algorithm may be used to drop a virtual ray with a certain probability.

Alternatively, a virtual ray may be dropped based on its throughput. Here, the throughput may refer to a value obtained by accumulating a bidirectional reflectance distribution function (BRDF) and a probability of the virtual ray hitting a face. The pixel value of an image may be calculated based on the throughput value and the characteristics (color, brightness, and the like) of a light source which the virtual ray reaches.

FIG. 8 is a graph illustrating a virtual ray drop method according to an embodiment. The controller 100 may determine whether to drop a virtual ray (i.e., whether to continue to trace a virtual ray) based on a predetermined function.

In FIG. 8, the x-axis denotes step, and the y-axis denotes the probability that the virtual ray will not be dropped. The units of the throughput may be a probability.

The controller 100 may drop the virtual ray when the throughput of the virtual ray is less than or equal to a predetermined threshold. Accordingly, a tracing operation for the dropped virtual ray may stop at an a-step. The step may refer to one step of the ray tracing operation.

Meanwhile, when the decision on whether to drop the virtual ray is made based on only the throughput, since the throughput does not fall below a predetermined threshold, the amount of computation for ray tracing may increase.

Thus, the controller 100 may determine whether to drop the virtual ray using a separate limit function in addition to the throughput.

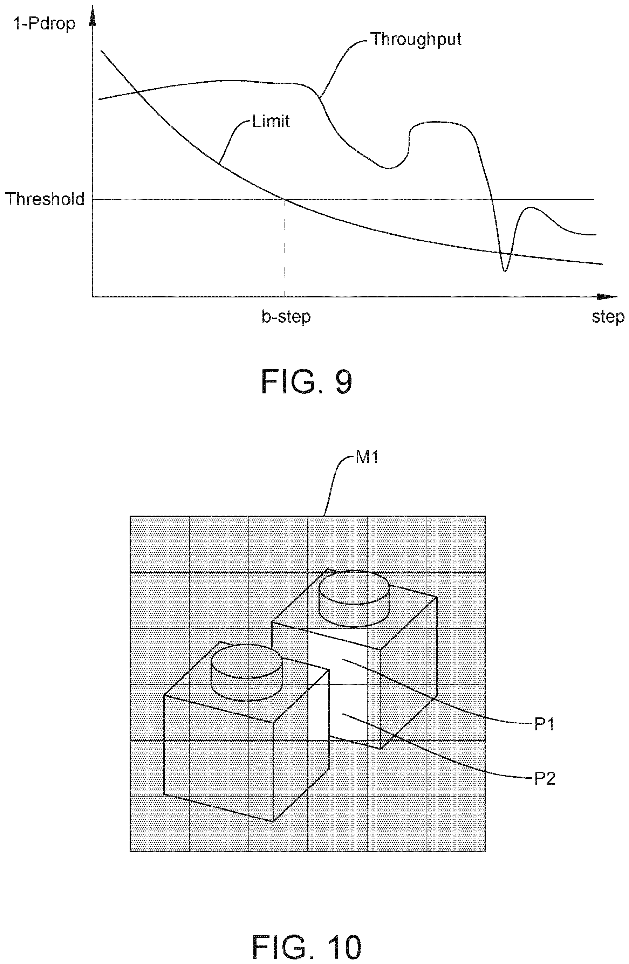

FIG. 9 is a graph illustrating a virtual ray drop method according to another embodiment.

The controller 100 may drop a virtual ray using a limit function and a throughput function indicating a throughput.

For example, the controller 100 may determine whether to drop the virtual ray based on the minimum value of the limit function and the throughput function. Specifically, the controller 100 may compare the minimum value to a predetermined threshold and may drop the virtual ray when the minimum value is less than or equal to the predetermined threshold. Accordingly, the controller 100 may stop the ray tracing process for the virtual ray when a b-step is reached in FIG. 9. The "b" may be smaller than the "a." That is, a step of stopping the ray tracing process for the virtual ray may be made earlier compared to the embodiment of FIG. 8.

Therefore, compared to the case where only the throughput function is used, it is possible to decrease the amount of computation for the ray tracing that is performed until the virtual ray is dropped.

Meanwhile, a predetermined weight may be assigned to a virtual ray that is not dropped. The controller 100 may increase the brightness or color value of the virtual ray that is not dropped.

Thus, the controller 100 may compensate for a decrease in brightness due to a dropped virtual ray. Accordingly, even when some virtual rays are dropped, the average brightness of a specific region in an image may be maintained.

That is, by weighting a virtual ray that is not dropped, it is possible to maintain the average brightness of an image while reducing the number of sampled virtual rays. This means that the average brightness of the image is maintained even though the amount of computation of ray tracing is decreased.

Meanwhile, in the case of an image generated through rendering, the brightness of a specific pixel may be excessively higher than the brightness of the surrounding pixels, that is, a so-called firefly phenomenon may appear. This may appear because the difference in brightness between adjacent pixels is amplified due to the weighting of the virtual ray that is not dropped.

FIG. 10 is a diagram showing a first image rendered according to an embodiment.

Referring to FIG. 10, a first image M1 may include 36 pixels of 6×6. The first image M1 may include a first pixel P1 and a second pixel P2.

The values of the first pixel P1 and the second pixel P2 may be greater than values of other surrounding pixels by a predetermined value or more.

When the difference between the values of the first pixel P1 and the second pixel P2 and the other surrounding pixels exceeds a predetermined range, features of an assembling element or an assembling toy included in the first image M1 may not appear well.

In order to solve this problem, the controller 100 may adjust the pixel values of the other surrounding pixels based on the pixel values of the first pixel P1 and the second pixel P2.

The controller 100 may adjust the pixel values of the pixels around the first pixel P1 based on a distance from the first pixel P1. Specifically, a pixel value of a first size may be assigned to pixels positioned relatively close to the first pixel P1, and a pixel value of a second size smaller than the first size may be assigned to pixels positioned relatively far from the pixel P1. Accordingly, features of an assembling element included in a pixel around the first pixel P1 may be represented well. The controller 100 may adjust the pixel value of the second pixel P2 in the same way.

The pixel value may be adjusted in various methods in addition to the above-described method. For example, the pixel values may be adjusted based on a Gaussian filter.

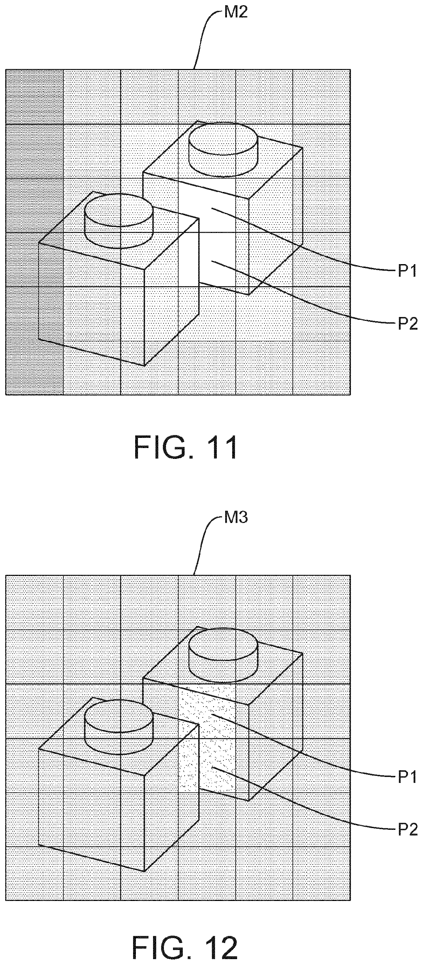

FIG. 11 is a diagram showing a second image M2 acquired from a first image M1 of FIG. 10 by adjusting the pixel value of the first image M1.

Before performing the pixel value adjustment operation, the controller 100 may detect a pixel in which a firefly appears. The controller 100 may detect a pixel in a specific pixel group having a pixel value greater than surrounding pixels by a specific range or greater.

Meanwhile, when the pixel value of any pixel exceeds a predetermined value, the controller 100 may change the pixel value of the pixel to a pre-designated upper limit. Alternatively, the size of the pixel value may be limited by an upper limit predetermined in a process of acquiring the pixel value of the image. A clamping operation may be performed in such a process.

FIG. 12 is a diagram showing a third image M3 acquired from the first image M1 of FIG. 10 by clamping the pixel value of the first image M1.

Meanwhile, the assembling toy may include an assembling element formed of a milky or pearl material. Subsurface scattering (subsurface sub scattering) or scattering (subscattering) phenomenon may occur in such assembling elements. When the scattering phenomenon occurs, the number of virtual rays required to generate an image through rendering may be large compared to the case of generating an image of an assembling element of a common material.

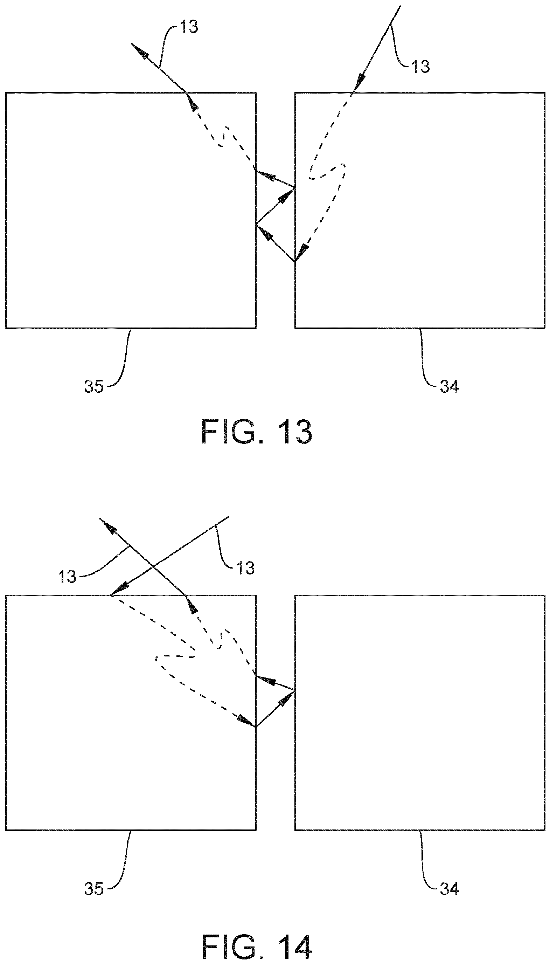

FIG. 13 is a diagram illustrating subscattering phenomenon in an assembling element.

Referring to FIG. 13, a virtual ray 13 may hit an eighth assembling element 34 and a ninth assembling element 35. The eighth assembling element 34 and the ninth assembling element 35 may contain a milky or pearl material. The virtual ray 13 may travel through the eighth assembling element 34 and then the ninth assembling element 35.

The controller 100 may perform a scattering processing operation for the eighth assembling element 34 and the ninth assembling element 35. Here, the scattering processing operation may refer to a light processing operation for an assembling element formed of a milky or pearl material. A separate characteristic parameter for the milky or pear material may be provided for the scattering processing operation.

Meanwhile, the scattering processing operation may vary depending on a distance between the eighth assembling element 34 and the ninth assembling element 35.

For example, when the distance between the eighth assembling element 34 and the ninth assembling element 35 is greater than or equal to a predetermined distance, the controller 100 may perform the scattering processing operation for the eighth assembling element 34 and the ninth assembling element 35. In this case, the controller 100 may perform the ray tracing operation for reflections or transmissions occurring between the eighth assembling element 34 and the ninth assembling element 35 in the same way as the ray tracing method for the common material other than the milky or pearl material. Also, the eighth assembling element 34 and the ninth assembling element 35 may have different scattering characteristics. Thus, the characteristic parameter of the eighth assembling element 34 and the characteristic parameter of the ninth assembling element 35 may have different values.

As another example, when the distance between the eighth assembling element 34 and the ninth assembling element 35 is less than or equal to the predetermined distance, the controller 100 may perform the scattering processing operation for the eighth assembling element 34 and the ninth assembling element 35. Even in this case, the controller 100 may perform the ray tracing operation for reflections or transmissions occurring between the eighth assembling element 34 and the ninth assembling element 35 in the same way as the ray tracing method for the common material other than the milky or pearl material.

Meanwhile, when surface processing between two assembling elements of a milky or pearl material is performed in the same way as the ray tracing method for the common material, a brightness difference may occur on the surfaces of the two assembling elements in the order in which the virtual ray 13 passes through the assembling elements. In this case, a separate factor parameter for correcting the brightness difference may be provided.

The controller 100 may perform the scattering processing operation in consideration of the order in which the virtual ray 13 passes through the assembling elements. A separate weight may be assigned based on the order in which the virtual ray 13 passes through the assembling elements. A separate factor parameter may be added in order to assign the weight. For example, a first factor parameter applied to the eighth assembling element 34 through which the virtual ray 13 passes first may have a smaller value than a second factor parameter applied to the ninth assembling element 35 through which the virtual ray 13 passes after passing through the eighth assembling element 34. The values of the first and second factor parameters may be one. Alternatively, the value of the second factor parameter may be greater than one.

On the other hand, typically, when sub scattering phenomenon occurs, the amount of computation for rendering is increased compared to other cases. Accordingly, in the related art, a plurality of objects in which subscattering phenomenon occurs are grouped into one group and are treated and rendered as the same object in the group. Therefore, according to the related art, scattering processing between objects having different scattering characteristics is not possible, and an object where scattering occurs should be manually specified.

On the other hand, the rendering system 1000 according to the present disclosure may independently perform a scattering processing operation for each assembling element. Accordingly, there is an advantage that scattering processing is possible even when scattering occurs in a plurality of assembling elements having different scattering characteristics.

Meanwhile, the ray scattering processing operation may vary depending on the order in which scattering occurs. For example, for an assembling element where scattering occurs first, the controller 100 may acquire information on a plurality of rays scattered to several points in one pixel. Also, for an assembling element where scattering occurs second, the controller 100 may acquire information on one ray only.

Meanwhile, as shown in FIG. 14, a virtual ray may enter or exit an assembling element multiple times.

Referring to FIG. 14, a virtual ray 13 may enter the ninth assembling element 35, exit the ninth assembling element 35, and then hit the eighth assembling element 34. After hitting the eighth assembling element 34, the virtual ray 13 may re-enter the ninth assembling element 35 and then exit the ninth assembling element 35.

In the case of a conventional rendering method, the number of times one virtual ray enters and exits one assembling element is limited to one. That is, the scattering processing operation can be performed at most once for an assembling element having the scattering characteri sti c.

Thus, when a virtual ray enters or exits one assembling element multiple times as shown in FIG. 14, indirect lighting caused by the multiple entrances or exits is not reflected in the rendering. For example, a part between the eighth assembling element 34 and the ninth assembling element 35 may be rendered dark.

In contrast, the rendering system 1000 according to the present disclosure allows overlapping scattering without limiting the number of times one virtual ray enters or exits one assembling element to one. Accordingly, the rendering system 1000 may perform the scattering processing operation twice for the ninth assembling element 35. Thus, it is possible to solve the problem of the part between the eighth assembling element 34 and the ninth assembling element 35 being rendered dark as described above.

Meanwhile, the above rendering method may be applied not only to a case in which scattering occurs multiple times in one assembling element as shown in FIG. 14, but also to a case in which scattering occurs multiple times in two adjacent assembling elements as shown in FIG. 13.

The configurations and features of the present disclosure have been described based on the embodiments according to the present disclosure in the above description, but the present disclosure is not limited thereto.

### Description of reference symbols

1000: rendering system, 100: controller, 110: ray tracing unit, 120: noise processing unit, 200: memory, 10: virtual camera, 11: screen, 12: pixel A, 13: virtual ray, 14: light source, 15: intersection point, 20: assembling toy, 21: first assembling element, 22: second assembling element, 23: third assembling element, 24: first face, 25: second face, 26: fourth, assembling element, 27: third face, 28: fourth face, 29: fifth assembling element, 30: fifth face, 31: sixth face, 32: sixth assembling element, 33: seventh assembling element, 34: eighth assembling element, 35: ninth assembling element

## Claims

1. A rendering method for generating an image of an assembling toy formed by coupling a plurality of assembling elements arranged in a virtual space, the rendering method comprising:
placing a virtual camera, which is an origin of a ray of light traveling in the virtual space, in the virtual space;
emitting a virtual ray from the virtual camera; and
determining a pixel value of a pixel corresponding to the virtual ray among pixels of the image in consideration of characteristic information of a transparent assembling element when the virtual ray hits the transparent assembling element among the plurality of assembling elements wherein the characteristic information includes at least a transmittance albedo and a reflectance albedo,
wherein when the virtual ray hits a first transparent assembling element and a second transparent assembling element, determining a pixel value of a pixel comprises:
acquiring a final transmittance albedo in consideration of a transmittance albedo of the first transparent assembling element and a transmittance albedo of the second transparent assembling element;
acquiring, as a final reflectance albedo, a reflectance albedo of a transparent assembling element which the virtual ray emitted from the virtual camera hits first wherein the reflectance albedo is one of a reflectance albedo of the first transparent assembling element and a reflectance albedo of the second transparent assembling element; and
determining the pixel value based on the final transmittance albedo and the final reflectance albedo.

2. The rendering method of claim 1, wherein when the first transparent assembling element includes a first face and a second face, acquiring a final transmittance albedo comprises acquiring the final transmittance albedo in consideration of a transmittance albedo of the first face and a transmittance albedo of the second face.

3. The rendering method of claim 2, wherein when the transparent assembling element that is hit first includes a first face and a second face, acquiring a final reflectance albedo comprises acquiring, as the final reflectance albedo, a reflectance albedo of a face which is one of the first face and the second face and which the virtual ray emitted from the virtual camera hits first.

4. The rendering method of claim 1, wherein the determining of a pixel value comprises calculating a final albedo based on the final transmittance albedo and the final reflectance albedo.

5. The rendering method of claim 4, wherein the final albedo is calculated based on a value obtained by multiplying the final transmittance albedo by the final reflectance albedo.

6. The rendering method of claim 1, wherein determining the pixel value comprises determining the pixel value based on a normal and depth value of a transparent assembling element which is one of the first transparent assembling element and the second transparent assembling element and which the virtual ray emitted from the virtual camera hits first.

7. The rendering method of claim 1, further comprising:
accumulating roughness of the first transparent assembling element and roughness of the second transparent assembling element; and
stopping the acquisition of the final transmittance albedo when the accumulated roughness is greater than predetermined roughness.

8. The rendering method of claim 7, wherein when a transparent assembling element, which the virtual ray emitted from the virtual camera hits first, is the first transparent assembling element and a transparent assembling element, which the virtual ray emitted from the virtual camera hits second, is the second transparent assembling element, the predetermined roughness is determined based on the roughness of the first transparent assembling element and the roughness of the second transparent assembling element.

9. The rendering method of claim 8, wherein the predetermined roughness is an intermediate value of the roughness of the first transparent assembling element and the second roughness of the second transparent assembling element.

10. The rendering method of claim 1, further comprising:
accumulating the number of times the virtual ray hits the transparent assembling element; and
stopping the acquisition of the final transmittance albedo when the accumulated number of times is greater than or equal to a predetermined number.

11. A rendering device comprising:
a storage unit configured to store characteristic information of a plurality of assembling elements arranged in a virtual space wherein the characteristic information includes at least a transmittance albedo and a reflectance albedo; and
a control unit configured to generate an image of an assembling toy formed by coupling the plurality of assembling elements in consideration of the characteristic information stored in the storage unit,
wherein when a virtual ray emitted from a virtual camera, which is disposed in the virtual space and is an origin of a ray of light traveling in the virtual space, hits a transparent assembling element among the plurality of assembling elements, the control unit determines a pixel value of a pixel corresponding to the virtual ray among pixels of the image in consideration of characteristic information of the transparent assembling element, wherein the characteristic information includes at least a transmittance albedo and a reflectance albedo,
wherein when the virtual ray hits a first transparent assembling element and a second transparent assembling element, the control unit acquires a final transmittance albedo in consideration of a transmittance albedo of the first transparent assembling element and a transmittance albedo of the second transparent assembling element, acquires, as a final reflectance albedo, a reflectance albedo of a transparent assembling element which the virtual ray emitted from the virtual camera hits first, wherein the reflectance albedo is one of a reflectance albedo of the first transparent assembling element and a reflectance albedo of the second transparent assembling element, and determines the pixel value based on the final transmittance albedo and the final reflectance albedo.

12. A computer-readable recording medium storing a computer program for generating an image of an assembling toy formed by coupling a plurality of assembling elements arranged in a virtual space, the computer-readable recording medium comprising a computer program that, when a virtual ray hits a transparent assembling element among the plurality of assembling elements, determines a pixel value of a pixel corresponding to the virtual ray among pixels of the image in consideration of characteristic information of the transparent assembling element, wherein the characteristic information includes at least a transmittance albedo and a reflectance albedo,
wherein when the virtual ray hits a first transparent assembling element and a second transparent assembling element, the computer program comprises:
program code configured to acquire a final transmittance albedo in consideration of a transmittance albedo of the first transparent assembling element and a transmittance albedo of the second transparent assembling element;
program code configured to acquire, as a final reflectance albedo, a reflectance albedo of a transparent assembling element which the virtual ray emitted from the virtual camera hits first, wherein the reflectance albedo is one of a reflectance albedo of the first transparent assembling element and a reflectance albedo of the second transparent assembling element; and
program code configured to determine the pixel value based on the final transmittance albedo and the final reflectance albedo.

## Patentansprüche

1. Rendern-Verfahren zum Erzeugen eines Bildes eines Bauspielzeugs, das durch Koppeln einer Vielzahl von in einem virtuellen Raum angeordneten Bauelementen gebildet wird, wobei das Rendern-Verfahren umfasst:
Platzieren einer virtuellen Kamera, die ein Ursprung eines in dem virtuellen Raum verlaufenden Lichtstrahls ist, in dem virtuellen Raum;
Emittieren eines virtuellen Strahls von der virtuellen Kamera; und
Bestimmen eines Pixelwerts eines Pixels, das dem virtuellen Strahl entspricht, unter Pixeln des Bildes unter Berücksichtigung von charakteristischen Informationen eines transparenten Bauelements, wenn der virtuelle Strahl auf das transparente Bauelement unter der Vielzahl von Bauelementen trifft, wobei die charakteristischen Informationen mindestens eine Transmissionsalbedo und eine Reflexionsalbedo beinhalten,
wobei, wenn der virtuelle Strahl auf ein erstes transparentes Bauelement und ein zweites transparentes Bauelement trifft, Bestimmen eines Pixelwertes eines Pixels umfasst:
Erfassen einer endgültigen Transmissionsalbedo unter Berücksichtigung einer Transmissionsalbedo des ersten transparenten Bauelements und einer Transmissionsalbedo des zweiten transparenten Bauelements;
Erfassen, als endgültige Reflexionsalbedo, einer Reflexionsalbedo eines transparenten Bauelements, auf das der von der virtuellen Kamera emittierte virtuelle Strahl zuerst trifft, wobei die Reflexionsalbedo eine von einer Reflexionsalbedo des ersten transparenten Bauelements und einer Reflexionsalbedo des zweiten transparenten Bauelements ist; und
Bestimmen des Pixelwerts auf Grundlage der endgültigen Transmissionsalbedo und der endgültigen Reflexionsalbedo.

2. Rendern-Verfahren nach Anspruch 1, wobei, wenn das erste transparente Bauelement eine erste Fläche und eine zweite Fläche beinhaltet, Erfassen einer endgültigen Transmissionsalbedo Erfassen der endgültigen Transmissionsalbedo unter Berücksichtigung einer Transmissionsalbedo der ersten Fläche und einer Transmissionsalbedo der zweiten Fläche umfasst.

3. Rendern-Verfahren nach Anspruch 2, wobei, wenn das transparente Bauelement, das zuerst getroffen wird, eine erste Fläche und eine zweite Fläche beinhaltet, Erfassen einer endgültigen Reflexionsalbedo Erfassen, als endgültige Reflexionsalbedo, einer Reflexionsalbedo einer Fläche, die eine von der ersten Fläche und der zweiten Fläche ist und die der von der virtuellen Kamera emittierte virtuelle Strahl zuerst trifft, umfasst.

4. Rendern-Verfahren nach Anspruch 1, wobei das Bestimmen eines Pixelwerts Berechnen einer endgültigen Albedo auf Grundlage der endgültigen Transmissionsalbedo und der endgültigen Reflexionsalbedo umfasst.

5. Rendern-Verfahren nach Anspruch 4, wobei die endgültige Albedo auf Grundlage eines Wertes berechnet wird, der durch Multiplizieren der endgültigen Transmissionsalbedo mit der endgültigen Reflexionsalbedo erhalten wird.

6. Rendern-Verfahren nach Anspruch 1, wobei Bestimmen des Pixelwerts Bestimmen des Pixelwerts auf Grundlage eines Normal- und Tiefenwerts eines transparenten Bauelements, das eines vom ersten transparenten Bauelement und dem zweiten transparenten Bauelement ist und auf das der von der virtuellen Kamera emittierte virtuelle Strahl zuerst trifft, umfasst.

7. Rendern-Verfahren nach Anspruch 1, weiter umfassend:
Akkumulieren von Rauheit des ersten transparenten Bauelements und Rauheit des zweiten transparenten Bauelements; und
Stoppen der Erfassung der endgültigen Transmissionsalbedo, wenn die akkumulierte Rauheit größer ist als vorbestimmte Rauheit.

8. Rendern-Verfahren nach Anspruch 7, wobei, wenn ein transparentes Bauelement, auf das der von der virtuellen Kamera emittierte virtuelle Strahl zuerst trifft, das erste transparente Bauelement ist und ein transparentes Bauelement, auf das der von der virtuellen Kamera emittierte virtuelle Strahl als zweites trifft, das zweite transparente Bauelement ist, die vorbestimmte Rauheit auf Grundlage der Rauheit des ersten transparenten Bauelements und der Rauheit des zweiten transparenten Bauelements bestimmt wird.

9. Rendern-Verfahren nach Anspruch 8, wobei die vorbestimmte Rauheit ein Zwischenwert der Rauheit des ersten transparenten Bauelements und der zweiten Rauheit des zweiten transparenten Bauelements ist.

10. Rendern-Verfahren nach Anspruch 1, weiter umfassend:
Akkumulieren der Anzahl der Male, die der virtuelle Strahl auf das transparente Bauelement trifft; und
Stoppen der Erfassung der endgültigen Transmissionsalbedo, wenn die akkumulierte Anzahl der Male größer als oder gleich einer vorbestimmten Anzahl ist.

11. Grafikdarstellungsvorrichtung, umfassend:
eine Speichereinheit, die so konfiguriert ist, dass sie charakteristische Informationen einer Vielzahl von in einem virtuellen Raum angeordneten Bauelementen speichert, wobei die charakteristischen Informationen mindestens eine Transmissionsalbedo und eine Reflexionsalbedo beinhalten; und
eine Steuereinheit, die so konfiguriert ist, dass sie ein Bild eines durch Koppeln der Vielzahl von Bauelementen gebildeten Bauspielzeugs unter Berücksichtigung der in der Speichereinheit gespeicherten charakteristischen Informationen erzeugt,
wobei, wenn ein virtueller Strahl, der von einer virtuellen Kamera emittiert wird, die in dem virtuellen Raum eingerichtet ist und ein Ursprung eines Lichtstrahls ist, der in dem virtuellen Raum verläuft, auf ein transparentes Bauelement unter der Vielzahl von Bauelementen trifft, die Steuereinheit einen Pixelwert eines Pixels, das dem virtuellen Strahl entspricht, unter Pixeln des Bildes unter Berücksichtigung von charakteristischen Informationen des transparenten Bauelements bestimmt, wobei die charakteristischen Informationen mindestens eine Transmissionsalbedo und eine Reflexionsalbedo beinhalten,
wobei, wenn der virtuelle Strahl auf ein erstes transparentes Bauelement und ein zweites transparentes Bauelement trifft, die Steuereinheit eine endgültige Transmissionsalbedo unter Berücksichtigung einer Transmissionsalbedo des ersten transparenten Bauelements und einer Transmissionsalbedo des zweiten transparenten Bauelements erfasst, als endgültige Reflexionsalbedo eine Reflexionsalbedo eines transparenten Bauelements erfasst, auf das der von der virtuellen Kamera emittierte virtuelle Strahl zuerst trifft, wobei die Reflexionsalbedo eine von einer Reflexionsalbedo des ersten transparenten Bauelements und einer Reflexionsalbedo des zweiten transparenten Bauelements ist, und den Pixelwert auf Grundlage der endgültigen Transmissionsalbedo und der endgültigen Reflexionsalbedo bestimmt.

12. Computerlesbares Aufzeichnungsmedium, das ein Computerprogramm zum Erzeugen eines Bildes eines Bauspielzeugs, das durch Koppeln einer Vielzahl von in einem virtuellen Raum angeordneten Bauelementen gebildet wird, speichert, wobei das computerlesbare Aufzeichnungsmedium ein Computerprogramm umfasst, das, wenn ein virtueller Strahl auf ein transparentes Bauelement unter der Vielzahl von Bauelementen trifft, einen Pixelwert eines Pixels, das dem virtuellen Strahl entspricht, unter Pixeln des Bildes unter Berücksichtigung von charakteristischen Informationen des transparenten Bauelements bestimmt, wobei die charakteristischen Informationen mindestens eine Transmissionsalbedo und eine Reflexionsalbedo beinhalten,
wobei das Computerprogramm, wenn der virtuelle Strahl auf ein erstes transparentes Bauelement und ein zweites transparentes Bauelement trifft, umfasst:
Programmcode, der so konfiguriert ist, dass er eine endgültige Transmissionsalbedo unter Berücksichtigung einer Transmissionsalbedo des ersten transparenten Bauelements und einer Transmissionsalbedo des zweiten transparenten Bauelements erfasst;
Programmcode, der so konfiguriert ist, dass er als endgültige Reflexionsalbedo eine Reflexionsalbedo eines transparenten Bauelements, auf das der von der virtuellen Kamera emittierte virtuelle Strahl zuerst trifft, erfasst, wobei die Reflexionsalbedo eine von einer Reflexionsalbedo des ersten transparenten Bauelements und einer Reflexionsalbedo des zweiten transparenten Bauelements ist; und
Programmcode, der so konfiguriert ist, dass er den Pixelwert auf Grundlage der endgültigen Transmissionsalbedo und der endgültigen Reflexionsalbedo bestimmt.

## Revendications

1. Procédé de rendu pour générer une image d'un jeu de construction formé par couplage d'une pluralité d'éléments de construction agencés dans un espace virtuel, le procédé de rendu comprenant :
le placement d'une caméra virtuelle, qui est l'origine d'un rayon de lumière se déplaçant dans l'espace virtuel, dans l'espace virtuel ;
l'émission d'un rayon virtuel à partir de la caméra virtuelle ; et
la détermination d'une valeur de pixel d'un pixel correspondant au rayon virtuel parmi les pixels de l'image en tenant compte d'informations caractéristiques d'un élément de construction transparent lorsque le rayon virtuel frappe l'élément de construction transparent parmi la pluralité d'éléments de construction, dans lequel les informations caractéristiques incluent au moins un albédo de transmission et un albédo de réflectance,
dans lequel, lorsque le rayon virtuel frappe un premier élément de construction transparent et un second élément de construction transparent, la détermination d'une valeur de pixel d'un pixel comprend :
l'acquisition d'un albédo de transmission final en tenant compte d'un albédo de transmission du premier élément de construction transparent et d'un albédo de transmission du second élément de construction transparent ;
l'acquisition, en tant qu'albédo de réflectance final, d'un albédo de réflectance d'un élément de construction transparent que le rayon virtuel émis par la caméra virtuelle frappe en premier, dans lequel l'albédo de réflectance est l'un d'un albédo de réflectance du premier élément de construction transparent et d'un albédo de réflectance du second élément de construction transparent ; et
la détermination de la valeur de pixel sur la base de l'albédo de transmission final et de l'albédo de réflectance final.

2. Procédé de rendu selon la revendication 1, dans lequel lorsque le premier élément de construction transparent inclut une première face et une seconde face, l'acquisition d'un albédo de transmission final comprend l'acquisition de l'albédo de transmission final en tenant compte d'un albédo de transmission de la première face et d'un albédo de transmission de la seconde face.

3. Procédé de rendu selon la revendication 1, dans lequel lorsque l'élément de construction transparent qui est frappé en premier inclut une première face et une seconde face, l'acquisition d'un albédo de réflectance final comprend l'acquisition, en tant qu'albédo de réflectance final, d'un albédo de réflectance d'une face qui est l'une parmi la première face et la seconde face et que le rayon virtuel émis par la caméra virtuelle frappe en premier.

4. Procédé de rendu selon la revendication 1, dans lequel la détermination d'une valeur de pixel comprend le calcul d'un albédo final sur la base de l'albédo de transmission final et de l'albédo de réflectance final.

5. Procédé de rendu selon la revendication 4, dans lequel l'albédo final est calculé sur la base d'une valeur obtenue en multipliant l'albédo de transmission final par l'albédo de réflectance final.

6. Procédé de rendu selon la revendication 1, dans lequel la détermination de la valeur de pixel comprend la détermination de la valeur de pixel sur la base d'une valeur de normale et de profondeur d'un élément de construction transparent qui est l'un du premier élément de construction transparent et du second élément de construction transparent et que le rayon virtuel émis de la caméra virtuelle frappe en premier.

7. Procédé de rendu selon la revendication 1, comprenant en outre :
le cumul de la rugosité du premier élément de construction transparent et de la rugosité du second élément de construction transparent ; et
l'arrêt de l'acquisition de l'albédo de transmission final lorsque la rugosité cumulée est supérieure à une rugosité prédéterminée.

8. Procédé de rendu selon la revendication 7, dans lequel lorsqu'un élément de construction transparent, que le rayon virtuel émis par la caméra virtuelle frappe en premier, est le premier élément de construction transparent et qu'un élément de construction transparent, que le rayon virtuel émis par la caméra virtuelle frappe en second, est le second élément de construction transparent, la rugosité prédéterminée est déterminée sur la base de la rugosité du premier élément de construction transparent et de la rugosité du second élément de construction transparent.

9. Procédé de rendu selon la revendication 8, dans lequel la rugosité prédéterminée est une valeur intermédiaire de la rugosité du premier élément de construction transparent et de la seconde rugosité du second élément de construction transparent.

10. Procédé de rendu selon la revendication 1, comprenant en outre :
le cumul du nombre de fois où le rayon virtuel frappe l'élément de construction transparent ; et
l'arrêt de l'acquisition de l'albédo de transmission final lorsque le nombre de fois cumulé est supérieur ou égal à un nombre prédéterminé.

11. Dispositif de rendu, comprenant :
une unité de stockage configurée pour stocker des informations caractéristiques d'une pluralité d'éléments de construction agencés dans un espace virtuel, dans lequel les informations caractéristiques incluent au moins un albédo de transmission et un albédo de réflectance ; et
une unité de commande configurée pour générer une image d'un jeu de construction formé par couplage de la pluralité d'éléments de construction en tenant compte des informations caractéristiques stockées dans l'unité de stockage,
dans lequel lorsqu'un rayon virtuel émis par une caméra virtuelle, qui est disposée dans l'espace virtuel et est l'origine d'un rayon de lumière se déplaçant dans l'espace virtuel, frappe un élément de construction transparent parmi la pluralité d'éléments de construction, l'unité de commande détermine une valeur de pixel d'un pixel correspondant au rayon virtuel parmi les pixels de l'image en tenant compte des informations caractéristiques de l'élément de construction transparent, dans lequel les informations caractéristiques incluent au moins un albédo de transmission et un albédo de réflectance,
dans lequel lorsque le rayon virtuel frappe un premier élément de construction transparent et un second élément de construction transparent, l'unité de commande acquiert un albédo de transmission final en tenant compte d'un albédo de transmission du premier élément de construction transparent et d'un albédo de transmission du second élément de construction transparent, acquiert, en tant qu'albédo de réflectance final, un albédo de réflectance d'un élément de construction transparent que le rayon virtuel émis par la caméra virtuelle frappe en premier, dans lequel l'albédo de réflectance est l'un parmi un albédo de réflectance du premier élément de construction transparent et un albédo de réflectance du second élément de construction transparent, et détermine la valeur de pixel sur la base de l'albédo de transmission final et de l'albédo de réflectance final.

12. Support d'enregistrement lisible par ordinateur stockant un programme informatique pour générer une image d'un jeu de construction formé par couplage d'une pluralité d'éléments de construction agencés dans un espace virtuel, le support d'enregistrement lisible par ordinateur comprenant un programme informatique qui, lorsqu'un rayon virtuel frappe un élément de construction transparent parmi la pluralité d'éléments de construction, détermine une valeur de pixel d'un pixel correspondant au rayon virtuel parmi les pixels de l'image en tenant compte d'informations caractéristiques de l'élément de construction transparent, dans lequel les informations caractéristiques incluent au moins un albédo de transmission et un albédo de réflectance,
dans lequel lorsque le rayon virtuel frappe un premier élément de construction transparent et un second élément de construction transparent, le programme informatique comprend :
un code de programme configuré pour acquérir un albédo de transmission final en tenant compte d'un albédo de transmission du premier élément de construction transparent et d'un albédo de transmission du second élément de construction transparent ;
un code de programme configuré pour acquérir, en tant qu'albédo de réflectance final, un albédo de réflectance d'un élément de construction transparent que le rayon virtuel émis par la caméra virtuelle frappe en premier, dans lequel l'albédo de réflectance est l'un d'un albédo de réflectance du premier élément de construction transparent et d'un albédo de réflectance du second élément de construction transparent ; et
un code de programme configuré pour déterminer la valeur de pixel sur la base de l'albédo de transmission final et de l'albédo de réflectance final.
